Europäisches Patentamt

European Patent Office

Office européen des brevets

(11) Publication number: **0 366 627**
**A1**

# EUROPEAN PATENT APPLICATION

(21) Application number: 89830466.2

(51) Int. Cl.5: **E04B 1/98** , **F16F 7/12**

(22) Date of filing: **25.10.89**

(30) Priority: **26.10.88 IT 2243288**

(43) Date of publication of application:
**02.05.90 Bulletin 90/18**

(84) Designated Contracting States:
**BE CH DE ES FR GB LI NL SE**

(71) Applicant: **FIP INDUSTRIALE S.P.A.**
**Via Scapacchiò**
**I-35030 Selvazzano Dentro (Padova)(IT)**

(72) Inventor: **Parducci, Alberto**
**Via Romagnoli 3**
**I- Roma(IT)**
Inventor: **Scaramuzza, Mauro**
**Via Frassinelli 52**
**I- Martellago (Venezia)(IT)**

(74) Representative: **Cicogna, Franco**
**Ufficio Internazionale Brevetti Dott.Prof.**
**Franco Cicogna Via Visconti di Modrone,**
**14/A**
**I-20122 Milano(IT)**

(54) Mechanical power dissipating and load limiting device for coupling structural elements, in particular for aseismatically protecting bridges, viaducts, buildings and the like.

(57) The power dissipating and load limiting device comprises at least an element of a plastic-resilient material (1) which can be operatively engaged by at least a penetrating element (2) adapted to plastically deform the plastic-resilient element so as to increase its cross extension with respect to the displacement direction of the penetrating element.

EP 0 366 627 A1

# MECHANICAL POWER DISSIPATING AND LOAD LIMITING DEVICE FOR COUPLING STRUCTURAL ELEMENTS,IN PARTICULAR FOR ASEISMATICALLY PROTECTING BRIDGES,VIADUCTS, BUILDINGS AND THE LIKE

## BACKGROUND OF THE INVENTION

The present invention relates to a mechanical power dissipating and load limiting device for coupling structural elements,in particular for aseismatically protecting bridges,viaducts,buildings and the like.

As is known,a seismic event generates sharp and rough displacements of the ground and,accordingly, also generates accelerations which are transmitted to the foundations of buildings and the like,to provide great inertial forces.

Also known is the fact that,in order to counterbalance the mentioned inertial forces,aseismatic elements are generally used,which have plastic characteristics, that is able of providing an operation in which the exerted forces are substantially independent,in a given period,from the strain.

These resilient-plastic elements substantially operate to dissipate mechanical power so as to reduce the structure response to earthquakes.

These elements,moreover,are specifically designed to control or adjust the inertial forces transmitt ed by the masses,such as the masses of the viaduct piles,coupled to the supporting structures suchs as stacks and shoulders,with self-evident great advantages.

From a dynamic stand point,the use of devices having a resilient-plastic performance corresponds to using,together with a "spring" in a series arrangement, an energy or power dissipating unit,provided with comparatively high dissipating characteristics and able to provide a very favorable ductile type of operation.

By means of such a dissipation it will be possible to greatly reduce the spectrum response of the overall system,with respect to the generated accelerations,with a consequent great reduction of the strain imposed on the supporting elements of the structures.

With respect to the seismic response from a displacement point of view and in particular in the case of bridge structures with truss supporting arrangement,such as in other civil buildings,the use of dissipating elements of the resilient-plastic type and having a high ductility,does not generate any appreciable variations of the maximum horizontal displacements,with respect to the arrangements including rigid couplings between the scaffoldings and stacks.

This fact occurs because the reduction of the horizontal force,transmitted through the dissipating devices prevents the stacks or piles,or supporting structures in general,from deforming beyond the permanent deformation resilient limits,even in the case of very violent earthquakes.

## SUMMARY OF THE INVENTION

The aim of the present invention is to provide such a mechanical power dissipating and load limiting device,for aseismatic purposes,which is very simple construction-wise and has very reliable and safe use characteristics.

Within the scope of the above mentioned aim, a main object of the invention is to provide such an aseismatic device which can be constructed with easily available materials and elements and which, moreover is very advantageous from a mere economic standpoint.

According to one aspect of the present invention, the above mentioned aim and objects,as well as yet other objects,which will become more apparent herein after,are achieved by an aseismatic mechanical power and load limiting device,for coupling structural elements,particularly designed for protecting bridge, viaducts,building and the like,characterized in that said device comprises at least a plastic-resilient element,which can be operatively engaged by a penetrating element adapted to resiliently deform said plastic-resilient element,so as to increase the cross extension of said resilient element transversely of the displacement direction of said penetrating element.

## BRIEF DESCRIPTION OF THE DRAWINGS

Further characteristics and advantages of the present invention will become more apparent hereinafter from the following detailed description of a preferred, though not exclusive,embodiment of an aseismatic mechanical power dissipating and load limiting device, which is illustrated,by way of an indicative but not limitative example,in the figures of the accompanying drawings,where:

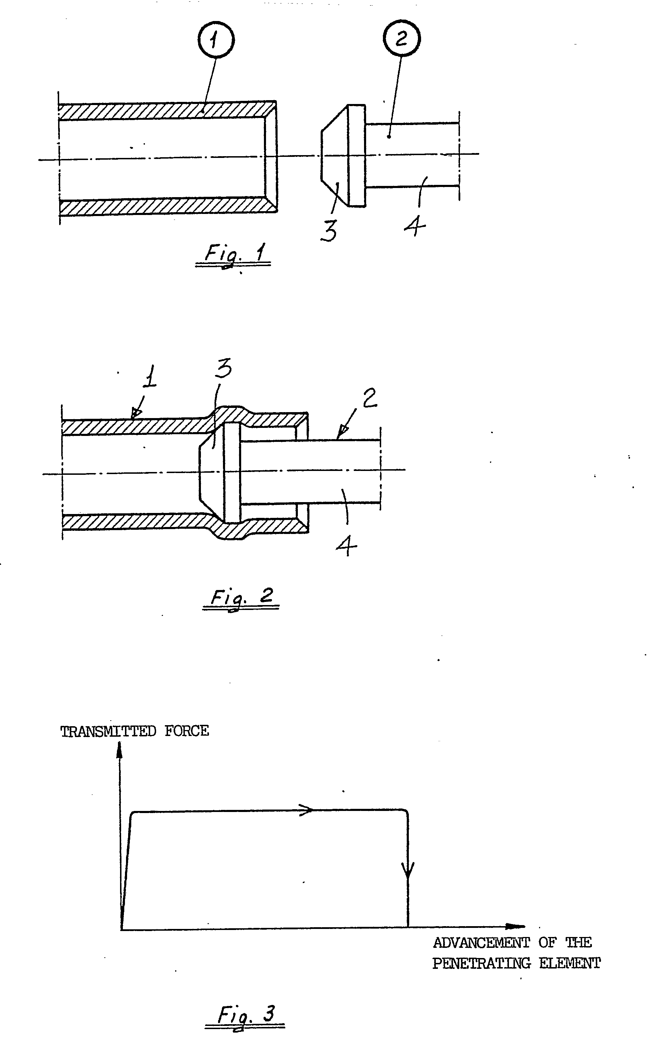

figure 1 is a schematic partial view,in exploded form,of the aseismatic device according to the invention;

figure 2 is a cross longitudinal sectional view illustrating the subject device in its deformed operating condition;

figure 3 is a schematic view illustrating a typical diagram of the transmitted force in function of the advancement of the penetrating element, with a plastic perfectly resilient relationship;

figure 4 shows an embodiment of the subject device designed for dissipating power in both the displacement directions, of the coupled elements; and

figure 5 shows another embodiment of the inventive device having a single acting type of operation which eliminates the penetrating element return movement with respect to the pipe.

## DESCRIPTION OF THE PREFERRED EMBODIMENTS

With reference to the figures of the accompanying drawings, the aseismatic device according to the present invention comprises a plastic-resilient material element, consisting of a tubular element, indicated at the reference number 1.

To this tubular element 1, a penetrating element 2 can be operatively coupled, which is provided with a frustum of cone shaped head, extending from a stem 4.

According to the invention, the penetrating element 2 can be inserted into the tubular body 1 so as to provide plastic or resilient deformations, and hence power dissipations, which are proportional to the advancement of said penetrating element, while the penetrating force holds constant, so as to form a limiting element for the force transmitted by the device.

For making an aseismatic device, it is possible to provide one or more elements of the above disclosed type and assemble said elements according to requirements.

In this connection it should be pointed out that an aseismatic device made as disclosed, can further comprise a controlled-breakage locking system, adapted to prevent the two elements, i.e tubular element and penetrating element, from mutually moving in a direction parallel to their axis, as far as the total transmitted force does not exceed a set value.

As the transmitted force is larger than the set value, the locking system will be easily broken, so as to allow for said elements to mutually displace and plastically or resiliently deform.

From the above it should be apparent that the subject power dissipating and load limiting device can comprise any suitable number of the illustrated component elements either provided or not with the disclosed additional locking devices.

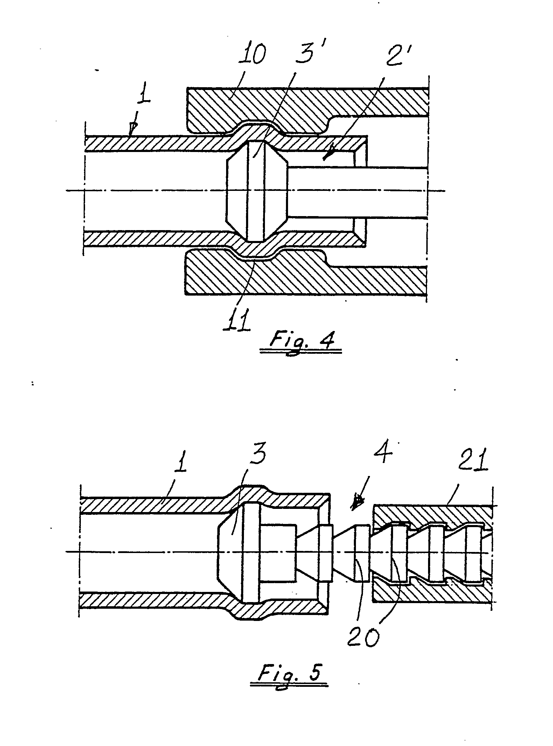

As shown in figure 4, it is possible to provide a penetrating element, indicated at the reference number 2', including a doubly tapering head 3' which engages in the tubular body 1 at a restraining body 10, which is provided with a recessed seat 11 so as to operate as a power dissipating element in both the displacement directions of the structural elements coupled to the device.

As shown in figure 5, the stem 4 of the penetrating device can comprise frustum of cone shaped portions 20, arranged inside a locking body 21, which is adapted to prevent the penetrating element from moving back from the tubular body.

In all of the above disclosed embodiments, a main feature of the subject device consists of the possibility of obtaining an operation ductility or flexibility which is not related to the unit maximum deformations of the material, but exclusively depends on the geometry of the system, i.e the length of the tube.

In the case of a violent earthquake, if the transmitted force is larger than given limits(that is the resilient deformation limits of the tube, or the breakage limits of the controlled-breakage locking system, if it is provided), then the structural elements coupled by the subject device will mutually move.

This mutual displacement will resiliently deform the tube material, with a consequent power dissipation.

Moreover the plastic-resilient nature of the subject device affords a safe limitation of the transmitted forces, in the case of a violent earthquake, while limiting within set values the seismic stress.

The thus made device can be practically used in different structural systems, preferably for coupling prefabricated structural elements and different structural subsystems.

To the foregoing it is to be added that it will be possible to provide further additional elements such as rollers and blocs coated by Teflon ( polyfluorotetraethylene) or the like, to transmit forces perpendicular to the mutual sliding direction of the device, or further devices for preventing the coupled parts from moving away.

While the invention has been disclosed and illustrated with reference to a preferred embodiment thereof, it should be apparent that the disclosed embodiment is susceptible to several modifications and variations, all of which will come within the spirit and scope of the appended claims.

## Claims

1- A mechanical power dissipating and load limiting device, for coupling structural elements, specifically designed for aseismatically protecting bridges, viaducts, buildings and the like, characterized in that said device comprise at least a plastic-resilient material element, operatively engaging with at least a penetrating element adapted to resiliently deform said plastic-resilient material element,so as to increase the extension of said plastics-resilient material element transversely of the displacement direction of said penetrating element.

2- A device according to claim 1,characterized in that said plastic-resilient material element has a substantially tubular shape.

3- A device according to claim 1 and 2,characterized in that said penetrating element has a substantially tapering head therefrom a penetrating element stem extends.

4- A device according to one or more of the preceding claims,characterized in that said device further comprises controlled-breakage locking means adapted to prevent said penetrating element and tubular element from mutually displacing as far as a transmitted force does not exceed a set value.

5- A device,according to one or more of the preceding claims,characterized in that said penetrating element is provided with a doubly tapering head,adapted for engaging with the tubular body at a restraining element body including a coupling recess,said doubly tapering head being adapted to dissipate power in both the directions of mutual displacement of said tubular body and penetrating element.

6- A device according to one or more of the preceding claims,characterized in that said device comprises, on the stem of said penetrating element,frustum of cone shaped portions engaged in a locking body,adapted to prevent said penetrating element from moving back from said tubular element.

7- A device,according to one or more of the preceding claims,characterized in that said device further comprises additional elements,such as Teflon coated roll or blocs adapted to transmit forces perpendicular to the sliding direction of said device.

EP 0 366 627 A1

Fig. 1

Fig. 2

TRANSMITTED FORCE

ADVANCEMENT OF THE
PENETRATING ELEMENT

Fig. 3

EP 0 366 627 A1

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 351 735 (YARROW) <br> * Page 3, lines 16-55,122-130; page 4, lines 1-32; figures 1,2,5 * <br> --- | 1-3,5 | E 04 B    1/98 <br> F 16 F    7/12 |
| A | FR-A-1 507 267 (U.T.A.C.) <br> * Page 1, column 2, lines 3-31; page 2, column 1, lines 3-33; column 2, lines 38-45; figures 1,5 * <br> --- | 1-5 | |
| A | MÜLLER, KEINTZEL; "Erdbebensicherung von Hochbauten", 2nd edition, 1984, pages 218-223, Ernst & Sons, Berlin, DE <br> * Page 220, lines 6-16; figures 10,16a,b * <br> ----- | 1 | |

TECHNICAL FIELDS
SEARCHED (Int. Cl.5)

E 04 B
E 04 H
F 16 F

The present search report has been drawn up for all claims

| Place of search | Date of completion of the search | Examiner |
|---|---|---|
| THE HAGUE | 24-01-1990 | BARBAS A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document